# EUROPEAN PATENT SPECIFICATION

(11) **EP 1 607 201 B1**
(45) Date of publication and mention of the grant of the patent: **05.12.2007**
(21) Application number: 05076433.1
(22) Date of filing: 20.06.2005
(51) Int. Cl.: B29C 33/20, B29C 45/14, B29C 70/76

(54) **Apparatus and method for providing a plastic edge on a plate**
Vorrichtung und Verfahren zum Anbringen eines Kunststoffrands an einer Platte
Procédé et appareil pour l'appication d'une bordure en plastique sur une plaque

(30) Priority: 18.06.2004 NL 1026466
(43) Date of publication of application: 21.12.2005
(73) Proprietor: Xidoor B.V., 5711 CS Someren (NL)
(72) Inventor: Gartsen, Bernardus Antonius Maria, 7051 AK Varsseveld (NL)
(74) Representative: Winckels, Johannes Hubertus F.

(56) References cited:
- WO-A-87/04973
- DE-A1- 4 110 150
- DE-B- 1 208 869
- DE-U1- 9 115 476
- LU-A1- 86 496
- US-A- 4 376 748
- US-A- 4 738 813
- US-A- 6 113 382
- DATABASE WPI Section Ch, Week 196800 Derwent Publications Ltd., London, GB; Class A00, AN 1968-44085Q XP002320510 -& NL 6 808 842 A (STAMICARBON NV) 24 December 1969 (1969-12-24)

## Description

The invention relates to an apparatus for providing at least one plastic edge to a first plate edge, which first plate edge is bound at the ends by two second plate edges, the apparatus being provided with at least one substantially U-shaped mold of elastically deformable material such as natural or synthetic rubber, which mold comprises a mold body and a first and second mold leg and which mold, in use, together with the plate edge, bounds a mold cavity having a cross-sectional shape which corresponds to a desired shape of the plastic edge to be provided, the mold cavity being accessible to liquid plastic via at least one injection opening, the mold being placed in a carrier, while press-on means are provided for pressing, in use, the legs of the U-shaped mold on the plate.

When, in this context, a U-shaped mold is discussed, here, in particular the outside configuration of the mold is involved. As indicated, the mold cavity bound by the mold and the plate edge usually has a different shape, which shape is defined by the desired shape of the plastic edge to be formed.

An apparatus of the type described in the opening paragraph is known from, for instance, Dutch patent 187733 or its patent family member DE-A-4110150. The problem that is described in this publication involves deformation of the mold cavity resulting from pressing the elastically deformable mold part with the aid of press-on means. Here, reference is made to the German patent application 3.516.452 wherein the mold is completely enclosed by the carrier and a press-on element. In the Dutch patent this complete locking is discarded and, conversely, space is created around the mold in order to reduce deformation of the mold cavity to a minimum. However, as a result of this, the problem of positioning the mold relative to the plate, the carrier and the press-on element is formed. The fact is that, to a large extent, the mold lies clear and is no longer locked so that displacement of the mold relative to the plate during injection of the plastic is possible unless measures are taken to that end. These measures constitute the subject of the Dutch patent mentioned.

In the present invention, the problems to which the Dutch patent provides a solution are no longer at issue because, in the present invention, the mold is once more substantially confined by the carrier and the press-on means. With the apparatus according to the invention, deformation of the mold cavity as a result of the mold being pressed hardly occurs, if at all, in that, inter alia, the press-on means are designed in a special manner. Furthermore, the apparatus known from the Dutch patent is relatively expensive in that all sorts of positioning means are to be provided.

The object of the invention is an apparatus without the drawbacks of the known apparatus, wherein a plastic edge can be formed onto a plate without expensive positioning means while, nevertheless, the predictability of the shape of the plastic edge is guaranteed to large extent.

To this end, according to the invention, the apparatus of the type described in the opening paragraph is characterized in that the carrier comprises a U-shaped carrier section with a first carrier leg, a carrier body and a second carrier leg, the mold being placed in a corner created by the first leg and the body of the carrier, the press-on means comprising at least one first press-on leg and a first flexible hose, the flexible hose being accommodated between the first press-on leg and a second carrier leg, while the first flexible hose is connected to a source of compressed air and is provided with a valve for reducing the pressure in the hose.

The first press-on leg and the first flexible hose ensure a-uniform press-on force over the entire length of the plate edge. As the press-on force is uniform over the entire length of the first plate edge, a complete closure of the mold cavity can already be effected with a relatively limited press-on force. As the press-on force is only limited, hardly any elastic material will be urged from the legs of the mold in the direction of the mold cavity. Consequently, hardly any deformation, if any, of the mold cavity will occur. Furthermore, a flexible hose connected to a source of compressed air is a particularly inexpensive means to provide the drive of the press-on means. That is why the apparatus according to the invention is much less expensive than apparatuses known heretofore. Moreover, the height of the apparatus is particularly small and it contains few maintenance-prone parts. Consequently, the apparatus is particularly durable and little vulnerable.

Naturally, it is possible to remove the press-on force again by draining the first hose. However, according to a further elaboration of the invention, it is preferred when the first press-on leg forms part of a substantially U-shaped press-on section also comprising a second press-on leg and a press-on body, which press-on section can be shifted relative to the carrier section in a direction parallel to the carrier body and perpendicular to the plate, while the first flexible hose forms part of drive means which are provided for realizing the displacement of the press-on section relative to the carrier section. It is then preferred when the drive means are provided with a second flexible hose which is confined between the second carrier leg and the second press-on leg, while the two flexible hoses are connected to a source of compressed air and are each provided with a valve for releasing the pressure in the respective hose.

With such an embodiment, the first press-on leg, more in particular the press-on section, can be positively moved upwards and downwards relative to the carrier section so that actual space between the legs of the mold can be created for removing the plate therefrom.

According to a further elaboration of the invention, the mold placed in the carrier is kept in place, in use, by suction means provided at least in the carrier body and, optionally, in the first carrier leg. These suction means prevent the mold from being pulled from the carrier when the plate is taken out. Furthermore, in a simple manner, the suction means ensure that the mold accurately abuts, with the mold body and, optionally, with the first mold leg, over the entire length of the mold, against the carrier body, the first carrier leg, respectively. A defined and an accurate abutment of the second mold leg is provided by pressing the first press-on leg of the press-on section by means of inflating the first flexible hose. For the purpose of taking the mold from the carrier an excess pressure can be created in the suction means so that the mold is, as it were, blown from the carrier.

For the purpose of closing off the end faces of the mold cavity, according to a further elaboration, the apparatus is provided with two closing blocks which, in use, are pressed against the second plate edges.

Here, for the purpose of positioning the plate relative to the mold, each closing block can be provided with a positioning element that cooperates with a second plate edge for accurately positioning the respective closing block relative to the first plate edge. Each positioning element can for instance comprise a pin connected to the closing block, which can be received in an accurately positioned hole in the second plate edge.

Further, one closing block can be provided with an injection opening which, via an injection channel, is in fluid communication with the mold cavity. The other closing block can be provided with a riser in the shape of a channel which, on the one side, ends up in the mold cavity and, on the other side, in the free space. A plastic injecting device can be connected to the injection opening. During injection of plastic via the injection opening, the mold cavity will fill up while, when the mold cavity is completely filled, the plastic will re-emerge via the riser in the other closing block. This emerging is an indication of the fact that the mold cavity is completely filled.

The invention also relates to method for providing a plate with a plastic edge utilizing an apparatus according to invention, wherein a plate is provided with a first plate edge to be provided with a plastic edge and with second plate edges bounding this first plate edge while, on each second plate edge, a closing block is positioned relative to the first plate edge, while thereupon, the plate is slid into the mold cavity of the mold until the closing blocks abut against the body of the mold, the press-on means being brought to a pressing condition by inflating the first flexible hose so that the legs of the mold are in liquid-tight perfect abutment with the main surfaces of the plate for forming a liquid-tightly closed-off mold cavity, while, thereupon, a plastic injecting device is connected to an injection opening and plastic is injected into the mold cavity until the plastic flows from a riser provided in the other closing block.

Such a method leads in an efficient, rapid and relatively inexpensive manner to a plate provided with a plastic edge. Moreover, the method can be automated in a simple manner with the aid of the apparatus. Further, with the aid of the method, also in a simple manner, a plate can simultaneously be provided on two opposite plate edges with a plastic edge. Naturally, the apparatus must then be designed double, in that two molds, two carrier sections, two press-on sections *et cetera* are provided which are arranged opposite each other and between which the plate can be received. In that case it is preferred that the molds, carrier sections, press-on sections are arranged for movement towards each other and away from each other so that plates of different dimensions can be received therebetween.

According to a further embodiment of the method, for the purpose of positioning the closing blocks, a hole can be provided in each second plate edge at an accurately determined distance from the first plate edge, in which hole a positioning pin of a respective closing block can be received.

The invention will presently be further clarified on the basis of an exemplary embodiment with reference to the drawing. In the drawing:
Fig. 1 shows, in part, a perspective view of an exemplary embodiment of the apparatus according to the invention, more specifically of the side of the closing block with the injection opening;
Fig. 2 shows, in part, a perspective view of the apparatus represented in Fig. 1, more specifically of the side of the closing block with the riser;
Fig. 3 shows a cross-section through the plate, perpendicular to the longitudinal direction of the mold;
Fig. 4 shows a cross-section through the closing block with the injection opening perpendicular to the longitudinal direction of the mold;
Fig. 5 shows a cross-section through the closing block with the riser perpendicular to the longitudinal direction of the mold; and
Fig. 6 shows a perspective view of the closing block with the injection opening.

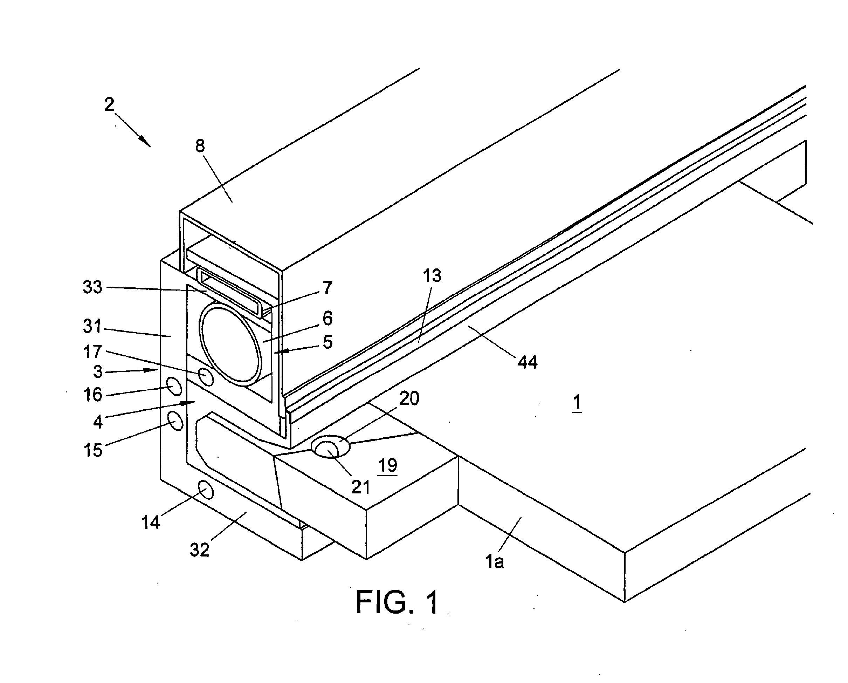

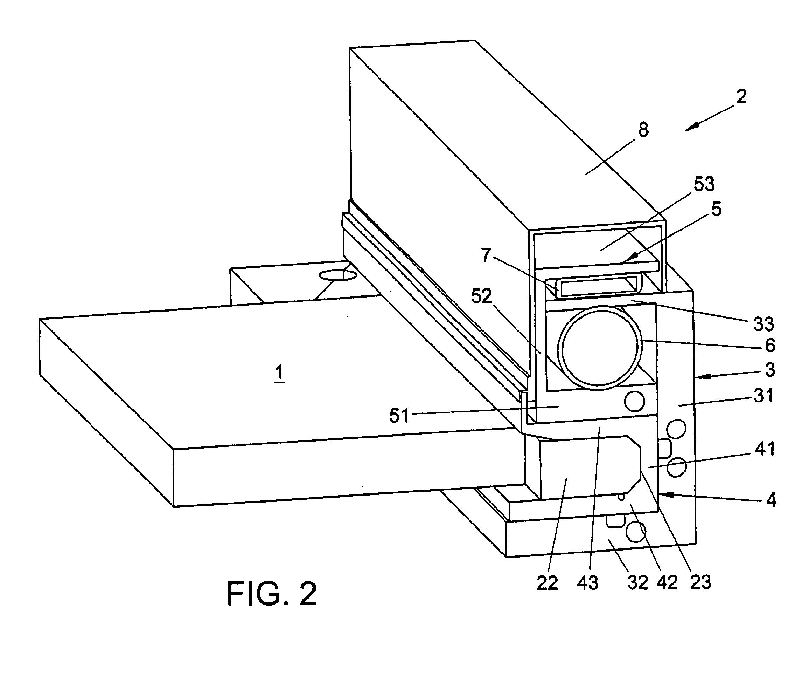

Figs. 1 and 2 clearly show a plate 1 on which the plastic edge is to be formed with the aid of the apparatus 2. The apparatus 2 is provided with a carrier 3, which carrier 3 comprises a carrier body 31, a first carrier leg 32 and a second carrier leg 33. In the carrier 3, a mold 4 is included, manufactured from elastic rubber or plastic. The U-shaped mold 4 is provided with a mold body 41, a first mold leg 42 and a second mold leg 43. Figs. 1 and 2 further clearly show a press-on section 5, which press-on section 5 is provided with a first press-on leg 51, a press-on body 52 and a second press-on leg 53. Between the first press-on leg 51 and the second carrier leg 33, a first flexible hose 69 is included. Between the second carrier leg 33 and the second press-on leg 53, a second flexible hose 7 is included. The press-on section 5 can be adjusted upwards and downwards by inflating or, conversely, discharging pressure from the first or the second flexible hose 6, 7, respectively. The press-on section 5 is further bearing mounted so as to be upwardly and downwardly slideable in a guide housing 8 connected to the carrier section 3. The slideability is in a direction, parallel to the carrier body 31 and perpendicular to the plate 1.

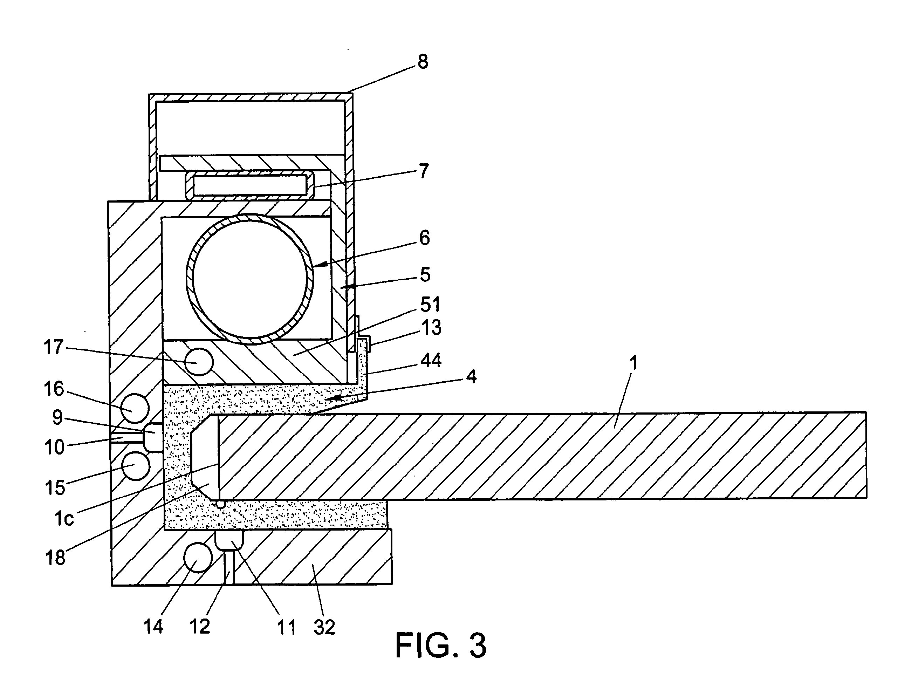

The mold 4 is retained in the carrier section 3 in that in the carrier section 3 suction means 9, 10, 11, 12 are provided. These suction means 9 - 12 are visible in cross-section in Fig. 3. Fig. 3 clearly shows a suction channel 9 which extends in longitudinal direction in the carrier body 4 and which can be connected via a channel 10 directed transversely thereto to a source of reduced pressure. A similar suction channel 11 extending in longitudinal direction is also provided in the first carrier leg 32. This suction channel 11 too can be connected via a channel 12 directed transversely thereto, to a source of reduced pressure. The mold 4 is further provided with a lip 44 which is formed on at the free end of the second mold leg 43. The lip 44 is clamped in a clamp 13 which is provided on the guide housing 8. By creating a reduced pressure in the suction channels 9, 11, the mold 4 is prevented from being pulled from the carrier 3 when the plate 1 is taken from the mold 4. Furthermore, the position of the mold 4 relative to the carrier 3 and the press-on section 5 is accurately defined in that the smooth outer contours of the mold 4 abut against the carrier 3 the first press-on leg 51 of the press-on section 5 in a tight-fitting manner. Figs. 1 - 5 further clearly show that in the first carrier leg 32, the carrier body 31 and the first press-on leg 51 at the location of the mold 4, channels 14, 15, 16, 17 are provided for feeding heating medium or cooling medium therethrough. These channels 14 - 17 are provided for the purpose of stimulating the polymerization process in the mold cavity 18 bound by the mold 4 and the plate 1.

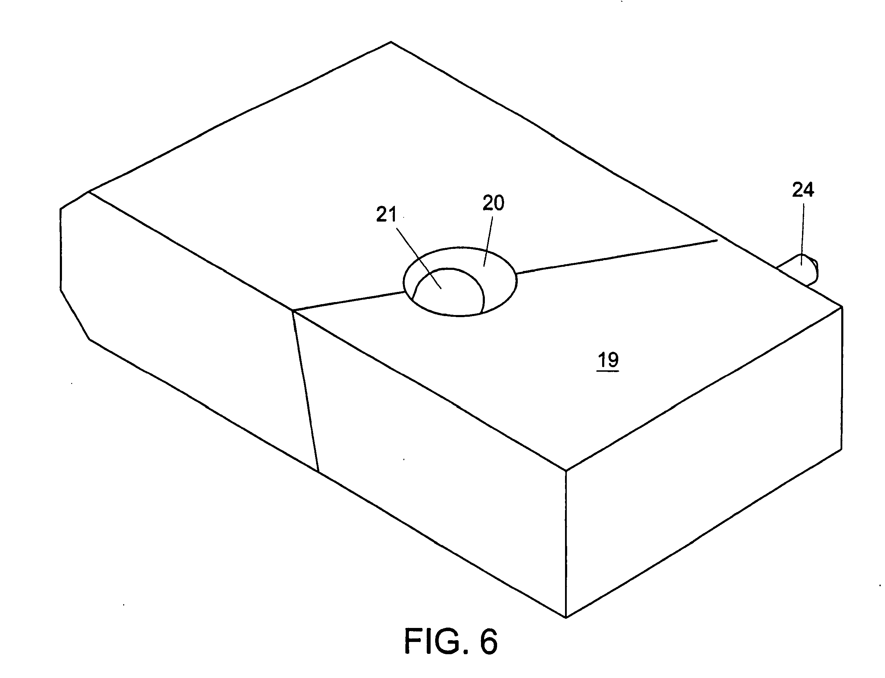

Fig. 1 further clearly shows the first closing block 19 provided with an injection opening 20 which is, via an injection channel 21, in fluid communication with the mold cavity 18. Fig. 2 shows a second closing block 22 closing off the mold cavity at the other end which is provided with a riser 23. As soon as, during injection of plastic via the injection opening 20 into the mold cavity 18, plastic flows from the riser 23, this is a sign that the mold cavity 18 is completely filled with plastic. At that moment, the injection process can be stopped. In order to accurately determine the position of the plate 1 relative to the mold 4, the first closing block 19 and the second closing block 22 are provided with positioning pins 24, one of which is visible in Fig. 6. In the second plate edges 1a, 1b, positioning holes are provided at a defined distance from the first plate edge 1c. (see Fig. 3). The positioning pins 24 of the closing blocks 19, 22 are inserted into the positioning holes and with this, the closing blocks 19, 22 are positioned relative to the plate 1 so that the depth of the mold cavity 18 is determined. The fact is that the plate 1 is slid into a mold 4 so far that the closing block is 19, 22 are pressed against the mold body 41, so that the end faces of the mold cavity 18 are closed off.

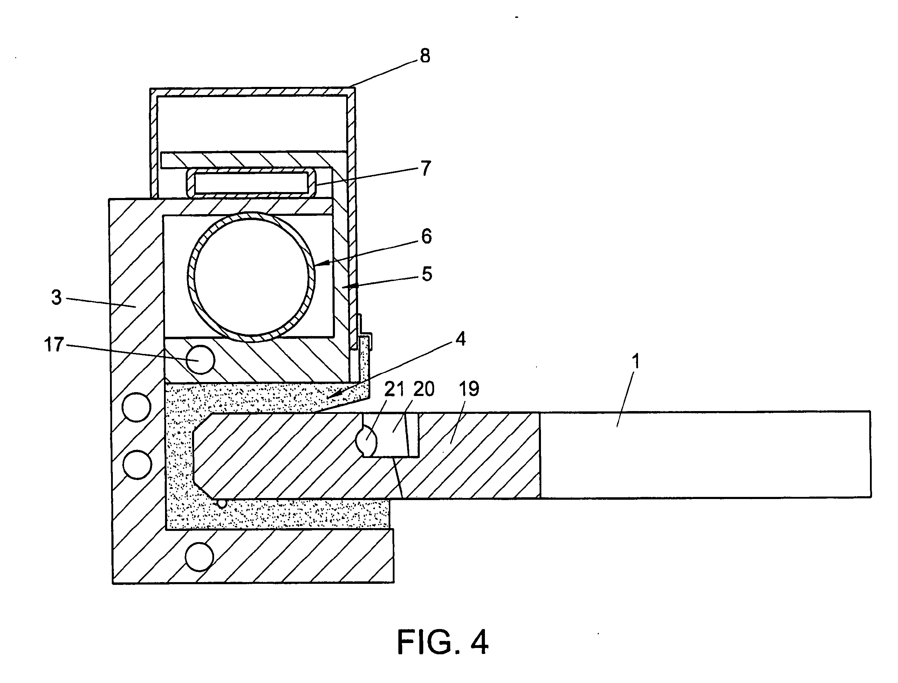

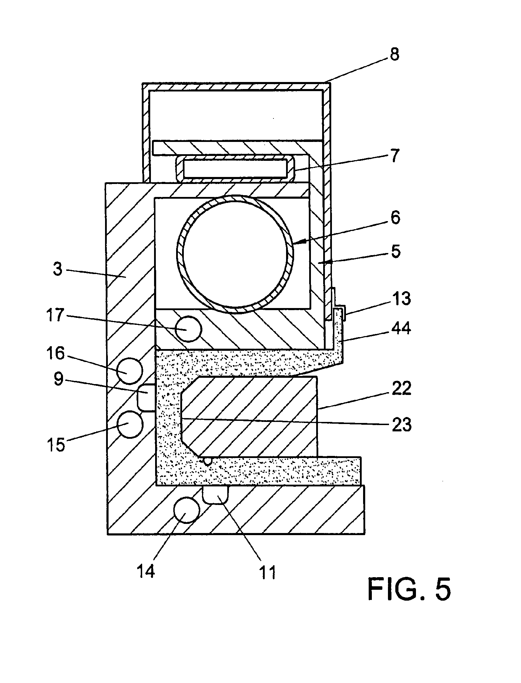

Figs. 4 and 5 show a similar cross-sectional view as represented in Fig. 3 however, here, through the respective closing blocks 19, 22.

In order to provide a plate 1 with a plastic edge, in each second plate edge 1a, 1b, a positioning hole is drilled at a defined distance from the first plate edge 1c. Then, by the positioning pin is 24 connected thereto, the closing blocks 19, 22 are inserted into the respective positioning holes so that the closing blocks 19, 20 are positioned accurately relative to the plate 1. Then, the plate with closing blocks 19, 22 is slid into the mold 4 until the closing blocks 19, 22 abut against the mold body 41. Thereupon, compressed air is pumped into the first flexible hose 6, so that the press-on section 5 slides downwards and the first press-on leg 51 is pressed on the second mold leg 43 in order to close off the mold cavity 18 in a liquid-tight manner. After that, via injection opening 20 and injection channel 21, plastic can be injected into the mold cavity 18. When the plastic has cured in the mold cavity 18, thereupon, the second flexible hose 7 can be inflated while the air is released from the first flexible hose 6. As a result thereof, the press-on section 5 will move upwards. The clamping of the plate 1 in the mold 4 is cancelled and the plate 1 can be taken from the mold.

During forming of plastic edges, placing the plate 1 in the mold 4 and/or taking out the plate 1 from the mold 4, the mold 4 can be held in the carrier 3 by creating a reduced pressure in the suction means 9, 10, 11, 12 which are provided in the carrier body 31 and, optionally, in the first carrier leg 32.

In order to exchange the mold 4, an excess pressure can be created in the suction means so that the mold can be pushed from the carrier 3.

It is clear that the invention is not limited to the exemplary embodiment described but that various modifications within the framework of the invention, as defined by the claims, are possible. The U-shaped carrier section 3 can be built up from various parts. The U-shaped press-on section 5 too may be built up from various parts. Naturally, the inside shape of the mold cavity can be varied so that edges with different shapes can be formed onto the plate. Further, in the first press-on leg too, suction means can be accommodated instead of, or in addition to, the clamp 13 engaging the lip 44.

Herein, carrier section and press-on section are understood to refer to elements having a certain cross-section along the entire length thereof.

## Claims

1. An apparatus for providing at least one plastic edge on a first plate edge (1c), which first plate edge (1c) is bound at the ends by two second plate edges (1a, 1b), which apparatus is provided with at least one, substantially U-shaped mold (4) of elastically deformable material such as natural or synthetic rubber, which mold (4) comprises a mold body (41) and a first and second mold leg (42, 43, respectively) and which mold (4), in use, together with the plate edge (1c) bounds a mold cavity (18) having a cross-sectional shape that corresponds to a desired shape of the plastic edge to be provided, which mold cavity (18) is accessible to liquid plastic via at least one injection opening (20), the mold (4) being placed in a carrier (3) while press-on means (5, 6, 7) are provided for pressing, in use, the legs (42, 43) of the U-shaped mold on the plate (1), **characterized in that** the carrier (3) is provided with a U-shaped carrier section (3) with a first carrier leg (32), a carrier body (31) and a second carrier leg (33), the mold being placed in a corner created by the first leg (32) and the body (31) of the carrier (3), the press-on means (5, 6, 7) comprising at least a first press-on leg (51) and a first flexible hose (6), the flexible hose (6) being accommodated between the first press-on leg (51) and the second carrier leg (33), while the first flexible hose (6) is connected to a source of compressed air and is provided with a valve for releasing the pressure in the hose (6).

2. An apparatus according to claim 1, wherein the first press-on leg (51) forms part of a substantially U-shaped press-on section (5) which also comprises a second press-on leg (53) and a press-on body (52), which press-on section (5) is slideable relative to the carrier section (3) in a direction parallel to the carrier body (31) and perpendicular to the plate (1), while the first flexible hose (6) forms part of drive means (6, 7) which are provided for realizing the displacement of the press-on section (5) relative to the carrier section (3).

3. An apparatus according to claim 2, wherein the drive means (6, 7) are provided with a second flexible hose (7) which is confined between the second carrier leg (33) and the second press-on leg (53), while the two flexible hoses (6, 7) are connected to a source of compressed air and are each provided with a valve for releasing the pressure in the respective hose (6, 7).

4. An apparatus according to any one of the preceding claims, wherein, in use, the mold (4) placed in the carrier (3) is kept in place by suction means (9 - 12) provided at least in the carrier body (31) and, optionally, in the first carrier leg (32).

5. An apparatus according to any one of the preceding claims, wherein in the carrier section (3) and in the first press-on leg (51), channels are provided for feeding cooling or heating medium therethrough.

6. An apparatus according to any one of the preceding claims, wherein press-on means (5, 6, 7) are slideably arranged in a direction parallel to the carrier body (31) and perpendicularly to the plate (1), while the press-on means (5,6, 7), at least the first press-on leg (51) thereof, for the purpose of the moveability, are guided in a guide housing (8) which is connected to the carrier section (3).

7. An apparatus according to any one of the preceding claims, wherein, for the purpose of closing off the end faces of the mold cavity (18), the apparatus is provided with two closing blocks (19, 22) which, in use, are pressed against the second plate edges (1a, 1b).

8. An apparatus according to claim 7, wherein, for the purpose of positioning the plate (1) relative to the mold (4), each closing block (19, 22) is provided with a positioning element (24) which cooperates with a said second plate edge (1a, 1b) for accurately positioning the respective closing block (19, 22) relative to the first plate edge (1c).

9. An apparatus according to claim 8, wherein each positioning element (24) comprises a pin (24), connected to the closing block (19, 22) which can be received in an accurately positioned hole in said second plate edge (1a, 1b).

10. An apparatus according to any one of claims 7 - 9, wherein the one closing block (19) is provided with an injection opening (20) which, via an injection channel (21), is in fluid communication with the mold cavity (18).

11. An apparatus according to any one of claims 7 - 10, wherein the other closing block (22) is provided with a riser (23) in the form of a channel which, on the one side, ends up in the mold cavity (18) and, on the other side, in the free space.

12. An apparatus according to claim 10, wherein a plastic injecting device can be connected to the injection opening (20).

13. A method for providing a plate (1) with a plastic edge, utilizing an apparatus according to any one of the preceding claims, wherein a plate (1) is provided with a first plate edge (1c) to be provided with a plastic edge, and with two plate edges (1a, 1b) bounding this first plate edge (1c), while on each second plate edge (1a, 1b) a closing block (19, 22) is positioned relative to the fist plate edge (1c), while thereupon, the plate (1) is slid into the mold cavity (18) of the mold (4) until the closing blocks (19, 22) abut against the body (41) of the mold (4), while the press-on means (5, 6, 7) are brought into a press-on condition by inflating the first flexible hose (6) so that the legs (42, 43) of the mold (4) are in liquid-tight perfect abutment with the main surfaces of the plate (1) for forming a liquid-tight, closed off mold cavity (18), while, thereupon, a plastic injecting device is connected to an injection opening (2) and plastic is injected into the mold cavity (18) until the plastic flows from a riser (23) provided in the other closing block (22).

14. A method according to claim 13, wherein for the purpose of positioning the closing blocks (19, 22), in each second plate edge (1a, 1b) a hole is provided at an accurately determined distance from the first plate edge (1c), in which hole a positioning pin (24) of a respective closing block (19, 22) can be received.

15. A method according to claim 13 or 14, wherein, after injection and curing of the plastic, the press-on means (5, 6, 7) are brought in a position of release after which the plate (1) is taken from the mold (4).

16. A method according to any one of claims 13 - 15, wherein, when the plastic edges are formed, the plate (1) is placed in the mold (4) and/or the plate (1) is taken from the mold (4), the mold is retained in the carrier (3) by creating a reduced pressure in the suction means (9 - 12) which are provided in the carrier body (31) and, optionally, in the first carrier leg (32).

17. A method according to any one of claims 13 - 16, wherein for the purpose of exchanging a mold (4), an excess pressure is created in the suction means (9-11) so that the mold (4) is pressed from the carrier (3).

18. A method according to any one of claims 13 - 17, wherein bringing the press-on means (5, 6, 7) in the pressing condition is realized by inflating the first flexible hose (6) and draining the second flexible hose (7) by pressing.

19. A method according to any one of claims 13-18, wherein bringing the press on means (5, 6, 7) in the condition of release is realized by inflating the second flexible hose (7) and draining the first flexible hose (6) by pressing.

## Patentansprüche

1. Vorrichtung zum Anbringen mindestens eines Kunststoffrands an einem ersten Plattenrand (1c), wobei der erste Plattenrand (1c) an den Enden durch zwei zweite Plattenränder (1a,1b) begrenzt ist, wobei die Vorrichtung mit mindestens einer im Wesentlichen U-förmigen Form (4) aus elastisch verformbaren Material wie z.B. Naturkautschuk oder künstlichem Kautschuk versehen ist, wobei die Form (4) einen Formkörper (41) sowie einen ersten und einen zweiten Formschenkel (42 bzw. 43) aufweist und die Form (4) bei Betrieb zusammen mit dem Plattenrand (1c) einen Formhohlraum (18) begrenzt, der eine Querschnittsform hat, die der gewünschten Form des zu erzeugenden Kunststoffrands entspricht, wobei der Formhohlraum (18) über mindestens eine Injektionsöffnung (20) für flüssigen Kunststoff zugänglich ist, wobei die Form (4) in einem Träger (3) platziert ist und Andrückvorrichtungen (5,6,7) vorgesehen sind, um bei Betrieb die Schenkel (42,43) der U-förmigen Form an die Platte (1) zu drücken,
**dadurch gekennzeichnet, dass** der Träger (3) einen U-förmigen Trägerabschnitt (3) mit einem ersten Trägerschenkel (32), einem Trägerkörper (31) und einem zweiten Trägerschenkel (33) aufweist, wobei die Form in einer durch den ersten Schenkel (32) und den Körper (31) des Trägers (3) gebildeten Ecke platziert ist, die Andrückvorrichtungen (5,6,7) mindestens einen ersten Andrückschenkel (51) und einen ersten flexiblen Schlauch (6) aufweisen, wobei der flexible Schlauch (6) zwischen dem ersten Andrückschenkel (51) und dem zweiten Trägerschenkel (33) angeordnet ist, während der erste flexible Schlauch (6) mit einer Druckluftquelle verbunden ist und mit einem Ventil zum Auslassen des in dem Schlauch (6) vorhandenen Drucks versehen ist.

2. Vorrichtung nach Anspruch 1, bei der der erste Andrückschenkel (51) einen Teil eines im Wesentlichen U-förmigen Andrückabschnitts (5) bildet, der ferner einen zweiten Andrückschenkel (53) und einen Andrückkörper (52) aufweist, wobei der Andrückabschnitt (5) relativ zu dem Trägerabschnitt (3) in einer parallel zu dem Trägerkörper (31) und rechtwinklig zu der Platte (1) verlaufenden Richtung gleitbar ist, während der erste flexible Schlauch (6) einen Teil von Antriebsvorrichtungen (6,7) bildet, die zur Durchführung der Bewegung des Andrückabschnitts (5) relativ zu dem Trägerabschnitt (3) vorgesehen sind.

3. Vorrichtung nach Anspruch 2, bei der die Antriebsvorrichtungen (6,7) mit einem zweiten flexiblen Schlauch (7) versehen sind, der zwischen dem zweiten Trägerschenkel (33) und dem zweiten Andrückschenkel (53) eingeschlossen ist, wobei die beiden flexiblen Schläuche (6,7) mit einer Druckluftquelle verbunden sind und jeweils mit einem Ventil zum Auslassen des in dem jeweiligen Schlauch (6,7) vorhandenen Drucks versehen ist.

4. Vorrichtung nach einem der vorhergehenden Ansprüche, bei der die in dem Träger (3) platzierte Form (4) bei Betrieb durch Saugvorrichtungen (9-12) in Position gehalten wird, die mindestens in dem Trägerkörper (31) und optional in dem ersten Trägerschenkel (32) vorgesehen sind.

5. Vorrichtung nach einem der vorhergehenden Ansprüche, bei der in dem in dem Trägerabschnitt (3) und in dem ersten Andrückschenkel (51) Kanäle zum Durchleiten eines Kühl- oder Heizmedium vorgesehen sind.

6. Vorrichtung nach einem der vorhergehenden Ansprüche, bei der Andrückvorrichtungen (5,6,7) in einer parallel zu dem Trägerkörper (31) und rechtwinklig zu der Platte (1) verlaufenden Richtung gleitbar angeordnet sind, wobei die Andrückvorrichtungen (5,6,7) bzw. mindestens ihr erster Andrückschenkel (51) zwecks Bewegbarkeit in einem Führungsgehäuse (8) geführt sind, das mit dem Trägerabschnitt (3) verbunden ist.

7. Vorrichtung nach einem der vorhergehenden Ansprüche, bei der zum Verschließen der Endflächen des Formhohlraums (18) die Vorrichtung mit zwei Verschlussblöcken (19,22) versehen ist, die bei Betrieb gegen die zweiten Plattenränder (1a, 1b) gedrückt werden.

8. Vorrichtung nach Anspruch 7, bei der zum Positionieren der Platte (1) relativ zu der Form (4) jeder Verschlussblock (19,22) mit einem Positionierungselement (24) versehen ist, das mit einem der zweiten Plattenränder (1a,1b) zusammenwirkt, um den jeweiligen Verschlussblock (19,22) relativ zu dem ersten Plattenrand (1c) exakt zu positionieren.

9. Vorrichtung nach Anspruch 8, bei der jedes Positionierungselement (24) einen mit dem Verschlussblock (19,22) verbundenen Stift (24) aufweist, der in einer präzise positionierten Öffnung in dem zweiten Plattenrand (1a,1b) aufgenommen werden kann.

10. Vorrichtung nach einem der Ansprüche 7-9, bei der der eine Verschlussblock (19) mit einer Injektionsöffnung (20) versehen ist, die sich über einen Injektionskanal (21) in Flüssigkeitsverbindung mit dem Formhohlraum (18) befindet.

11. Vorrichtung nach einem der Ansprüche 7-10, bei der der andere Verschlussblock (22) mit einem in Form eines Kanals ausgebildeten Steigrohr (23) versehen ist, das an einer Seite in dem Formhohlraum (18) und an der anderen Seite im freien Raum endet.

12. Vorrichtung nach Anspruch 10, bei der eine Kunststoffinjektionsvorrichtung mit der Injektionsöffnung (20) verbunden werden kann.

13. Verfahren, um unter Verwendung einer Vorrichtung nach einem der vorhergehenden Ansprüche eine Platte (1) mit einem Kunststoffrand zu versehen, bei dem eine Platte (1) einen ersten Plattenrand (1c), der mit einem Kunststoffrand versehen werden soll, und zwei den ersten Plattenrand (1c) begrenzende Plattenränder (1a,1b) aufweist, wobei an jedem zweiten Plattenrand (1a,1b) ein Verschlussblock (19,22) relativ zu dem ersten Plattenrand (1c) positioniert wird und daraufhin die Platte (1) gleitend in den Formhohlraum (18) der Form (4) bewegt wird, bis die Verschlussblöcke (19,22) an dem Körper (41) der Form (4) anliegen, wobei die Andrückvorrichtungen (5,6,7) in einen Andrückzustand versetzt werden, indem der erste flexible Schlauch (6) derart aufgeblasen wird, dass sich die Schenkel (42,43) der Form (4) in flüssigkeitsdichter perfekter Anlage an den Hauptflächen der Platte (1) befinden, um einen flüssigkeitsdichten, abgeschlossenen Formhohlraum (18) zu bilden, wobei daraufhin eine Kunststoffinjektionsvorrichtung mit einer Injektionsöffnung (2) verbunden wird und Kunststoff in den Formhohlraum (18) injiziert wird, bis der Kunststoff aus einem in dem anderen Verschlussblock (22) vorgesehenen Steigrohr (23) herausströmt.

14. Verfahren nach Anspruch 13, bei dem zum Positionieren der Verschlussblöcke (19,22) eine Öffnung in jedem zweiten Plattenrand (1a, 1b) in einem exakt bestimmten Abstand von dem ersten Plattenrand (1c) vorgesehen ist und in dieser Öffnung ein Positionierungsstift (24) eines betreffenden Verschlussblocks (19,22) aufgenommen werden kann.

15. Verfahren nach Anspruch 13 oder 14, bei dem nach dem Injizieren und Härten des Kunststoffs die Andrückvorrichtungen (5,6,7) in eine Freigabeposition gebracht werden, woraufhin die Platte (1) aus der Form (4) herausgenommen wird.

16. Verfahren nach einem der Ansprüche 13-15, bei dem, wenn die Kunststoffränder ausgebildet werden, die Platte (1) in der Form (4) platziert wird und/oder die Platte (1) aus der Form (4) entnommen wird, die Form in dem Träger (3) rückgehalten wird, indem in den im Trägerkörper (31) und optional im ersten Trägerschenkel (32) vorgesehenen Saugvorrichtungen (9-12) ein Unterdruck erzeugt wird.

17. Verfahren nach einem der Ansprüche 13-16, bei dem zum Austauschen einer Form (4) ein Überdruck in den Saugvorrichtungen (9-12) erzeugt wird, so dass die Form (4) aus dem Träger (3) herausgedrückt wird.

18. Verfahren nach einem der Ansprüche 13-17, bei dem der Andrückzustand der Andrückvorrichtungen (5,6,7) hergestellt wird, indem der erste flexible Schlauch (6) aufgeblasen wird und der zweite flexible Schlauch (7) durch Drücken entleert wird.

19. Verfahren nach einem der Ansprüche 13-18, bei dem der Freigabezustand der Andrückvorrichtungen (5,6,7) hergestellt wird, indem der zweite flexible Schlauch (7) aufgeblasen wird und der erste flexible Schlauch (6) durch Drücken entleert wird.

## Revendications

1. Appareil pour proposer au moins une bordure en plastique sur une première bordure de plaque (1c) , laquelle première bordure de plaque (1c) est délimitée au niveau des extrémités par deux secondes bordures de plaque (1a, 1b) lequel appareil est prévu avec au moins un moule sensiblement en forme de U (4) réalisé avec un matériau élastiquement déformable tel qu'un caoutchouc naturel ou synthétique, lequel moule (4) comprend un corps de moule (41) et une première et une seconde patte de moule (42, 43 respectivement) et lequel moule (4), à l'usage, conjointement à la bordure de plaque (1c) délimite un cavité de moule (18) ayant une forme transversale qui correspond à une forme souhaitée de la bordure en plastique à fournir, laquelle cavité de moule (18) est accessible pour du plastique liquide via au moins une ouverture d'injection (20), le moule (4) étant placé dans un support (3) alors que des moyens de pression (5, 6, 7) sont prévus pour comprimer, en fonctionnement, les pattes (42, 43) du moule en forme de U sur la plaque (1) **caractérisé en ce que** le support (3) est prévu avec une section de support en forme de U (3) avec une première patte de support (32), un corps de support (31) et une seconde patte de support (33), le moule étant placé dans un coin créé par la première patte (32) et le corps (31) du support (3), les moyens de pression (5, 6, 7) comprenant au moins une première patte de pression (51) et un premier tuyau flexible (6), le tuyau flexible (6) étant logé entre la première patte de pression (51) et la seconde patte de support (33), alors que le premier tuyau flexible (6) est raccordé à une source d'air comprimé et doté d'une soupape pour libérer la pression dans leur tuyau (6).

2. Appareil selon la revendication 1, dans lequel la première patte de pression (51) fait partie d'une section de pression (5) sensiblement en forme de U qui comprend également une seconde patte de pression (53) et un corps de pression (52), laquelle section de pression (5) peut coulisser par rapport à la section de support (3) dans une direction parallèle au corps du support (31) et perpendiculaire à la plaque (1), alors que le premier tuyau flexible (6) fait partie des moyens d'entraînement (6, 7) qui sont prévus pour réaliser le déplacement de la section de pression (5) par rapport à la section de support (3).

3. Appareil selon la revendication 2, dans lequel les moyens d'entraînement (6, 7) sont dotés d'un second tuyau flexible (7) qui est confiné entre la seconde patte de support (33) et la seconde patte de pression (53), alors que les deux tuyaux flexibles (6, 7) sont raccordés à une source d'air comprimé et sont chacun dotés d'une soupape pour libérer la pression dans le tuyau (6, 7) respectif.

4. Appareil selon l'une quelconque des revendications précédentes, dans lequel, en fonctionnement, le moule (4) placé dans le support (3) est maintenu en place par des moyens d'aspiration (9-12) prévus au moins dans le corps de support (31) et facultativement dans la première patte de support (32).

5. Appareil selon l'une quelconque des revendications précédentes, dans lequel dans la section de support (3) et dans la première patte de pression (51), on prévoit des canaux pour alimenter un milieu de refroidissement ou de chauffage à travers ceux-ci.

6. Appareil selon l'une quelconque des revendications précédentes, dans lequel les moyens de pression (5, 6, 7) sont agencés de manière coulissante dans une direction parallèle au corps de support (31) et perpendiculaires à la plaque (1), alors que les moyens de pression (5, 6, 7), au moins sa première patte de pression (51) pour le but de la mobilité, sont guidés dans un boîtier de guidage (8) qui est raccordé à la section de support (3).

7. Appareil selon l'une quelconque des revendications précédentes, dans lequel, afin de fermer les faces d'extrémité de la cavité de moule (18), l'appareil est doté de deux blocs de fermeture (19, 22) qui, en fonctionnement, sont comprimés contre les secondes bordures de plaque (1a, 1b).

8. Appareil selon la revendication 7, dans lequel, afin de positionner la plaque (1) par rapport au moule (4), chaque bloc de fermeture (19, 22) est doté d'un élément de positionnement (24) qui coopère avec ladite seconde bordure de plaque (1a, 1b) pour positionner précisément le bloc de fermeture (19, 22) respectif par rapport à la première bordure de plaque (1c).

9. Appareil selon la revendication 8, dans lequel chaque élément de positionnement (24) comprend une broche (24), raccordée au bloc de fermeture (19, 22) qui peut être reçue dans un trou précisément positionné dans ladite seconde bordure de plaque (1a, 1b)

10. Appareil selon l'une quelconque des revendications 7 à 9, dans lequel un bloc de fermeture (19) est doté d'une ouverture d'injection (20) qui, via un canal d'injection (21), est en communication de fluide avec la cavité de moule (18).

11. Appareil selon l'une quelconque des revendications 7 à 10, dans lequel l'autre bloc de fermeture (22) est doté d'une colonne montante (23) se présentant sous la forme d'un canal qui, d'un côté, se termine dans la cavité de moule (18) et de l'autre côté dans l'espace libre.

12. Appareil selon la revendication 10, dans lequel un dispositif d'injection de plastique peut être raccordé à l'ouverture d'injection (20).

13. Procédé pour proposer une plaque (1) avec une bordure en plastique, en utilisant un appareil selon l'une quelconque des revendications précédentes, dans lequel une plaque (1) est dotée d'une première bordure de plaque (1c) à prévoir avec une bordure en plastique, et avec deux bordures de plaque (1a, 1b) délimitant cette première bordure de plaque (1c), alors que sur chaque seconde bordure de plaque (1a, 1b), un bloc de fermeture (19, 22) est positionné par rapport à la première bordure de plaque (1c), alors que suite à cela, la plaque (1) coulisse dans la cavité de moule (18) du moule (4) jusqu'à ce que les blocs de fermeture (19, 22) viennent en butée contre le corps (41) du moule (4) alors que les moyens de pression (5, 6, 7) sont amenés dans une condition de pression en gonflant le premier tuyau flexible (6) de sorte que les pattes (42, 43) du moule (4) sont en butée parfaite étanche au liquide avec les surfaces principales de la plaque (1) pour former une cavité de moule (18) fermée étanche au liquide, alors que suite à cela, un dispositif d'injection de plastique est raccordé à une orifice d'injection (2) et le plastique est injecté dans la cavité de moule (18) jusqu'à ce que le plastique coule à partir d'une colonne montante (23) prévue dans l'autre bloc de fermeture (22) ;

14. Procédé selon la revendication 13, dans lequel afin de positionner les blocs de fermeture (19, 22), dans chaque seconde bordure de plaque (1a, 1b), on prévoit un trou à une distance précisément déterminée de la première bordure de plaque (1c), dans lequel trou, une broche de positionnement (24) d'un bloc de fermeture (19, 22) respectif peut être reçue.

15. Procédé selon la revendication 13 ou 14, dans lequel, après l'injection et le durcissement du plastique, les moyens de pression (5, 6, 7) sont amenés dans une position de libération, après quoi la plaque (1) est retirée du moule (4).

16. Procédé selon l'une quelconque des revendications 13 à 15, dans lequel, lorsque les bordures en plastique sont formées, la plaque (1) est placée dans le moule (4) et/ou la plaque (1) est retirée du moule (4), le moule est retenu dans le support (3) en créant une pression réduite dans les moyens d'aspiration (9 à 12) qui sont prévus dans le corps de support (31) et facultativement, dans la première patte de support (32).

17. Procédé selon l'une quelconque des revendications 13 à 16, dans lequel afin de changer un moule (4), on crée une pression en excès dans les moyens d'aspiration (9 à 11) de sorte que le moule (4) est comprimé par le support (3).

18. Procédé selon l'une quelconque des revendications 13 à 17, dans lequel le fait d'amener les moyens de pression (5, 6, 7) dans la condition de pression est réalisé en gonflant le premier tuyau flexible (6) et en évacuant le second tuyau flexible (7) par pression.

19. Procédé selon l'une quelconque des revendications 13 à 18, dans lequel le fait d'amener les moyens de pression (5, 6, 7) dans la condition de libération est réalisé en gonflant le second tuyau flexible (7) et en évacuant le premier tuyau flexible (6) par pression.
